(19) Europäisches Patentamt
European Patent Office
Office européen des brevets

(11) EP 3 770 376 A1

(12) EUROPEAN PATENT APPLICATION

(43) Date of publication:
**27.01.2021 Bulletin 2021/04**

(51) Int Cl.:
***E21B 17/10*** *(2006.01)*

(21) Application number: **20187803.0**

(22) Date of filing: **24.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2019 US 201916523616**

(71) Applicant: **Weatherford Technology Holdings, LLC**
**Houston, TX 77056 (US)**

(72) Inventors:
- **KRIEGER, Sebastian F.**
  **30455 Hannover (DE)**
- **KIESS, Christian**
  **30659 Hannover (DE)**

(74) Representative: **Docherty, Andrew John**
**Marks & Clerk LLP**
**Aurora**
**120 Bothwell Street**
**Glasgow G2 7JS (GB)**

(54) **CENTRALIZER**

(57) A method of manufacturing a centralizer having a plurality of blades includes cutting the plurality of blades from a metal sheet; hardening the plurality of blades using a heat treatment process; and welding the plurality of blades to a tubular body. The blades may be welded to the tubular body using a plurality of weld seams.

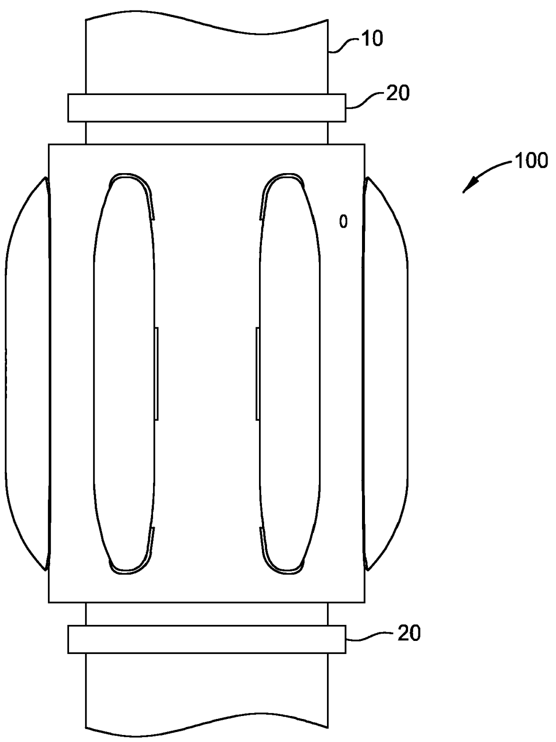


FIG. 1

EP 3 770 376 A1

## Description

## BACKGROUND

### Field

Embodiments of the present disclosure generally relate to a centralizer for use in wellbore operations.

### Description of the Related Art

A wellbore is formed to access hydrocarbon bearing formations, such as crude oil and/or natural gas, by the use of drilling. Drilling is accomplished by utilizing a drill bit that is mounted on the end of a drill string. To drill within the wellbore to a predetermined depth, the drill string is often rotated by a top drive or rotary table on a surface platform or rig, and/or by a downhole motor mounted towards the lower end of the drill string. After drilling to a predetermined depth, the drill string and drill bit are removed and a casing string is lowered into the wellbore. An annulus is formed between the string of casing and the wellbore. The casing string is cemented into the wellbore by circulating cement slurry into the annulus. The combination of cement and casing strengthens the wellbore and facilitates the isolation of certain formations behind the casing for the production of hydrocarbons.

Centralizers are mounted on the casing string to center the casing string in the wellbore and obtain a uniform thickness cement sheath around the casing string. Each centralizer has blades extending out from the casing wall and contacting the wellbore. The centralizers hold the casing string off of direct contact with the wellbore wall, and substantially centralize the casing therein. To accomplish that goal, the centralizer blades typically form a total centralizer diameter roughly the diameter of the wellbore in which the casing string is run.

One type of centralizer is rigid including a solid central tubular body having a plurality of solid blades integral with the central body. The blades extend out to the desired diameter. Another type is a bow spring centralizer, which includes a pair of spaced-apart bands locked into place on the casing. Resilient bow spring blades are spaced around the circumference of the bands and connects the two bands to each other. The bow spring centralizers are capable of at least partially collapsing as the casing string is run into the wellbore to pass through a restricted diameter location, such as a piece of equipment having an inner diameter smaller than the at-rest bow spring diameter, and then springing back out after passage through the restricted diameter location.

In some instances, such as during a drilling operation, the centralizer experiences extensive side loads and shows extensive wear.

There is a need, therefore, for a centralizer having wear resistant blades and capable of withstanding a high axial load.

## SUMMARY

In one embodiment, a method of manufacturing a centralizer having a plurality of blades includes cutting the plurality of blades from a metal sheet; hardening the plurality of blades using a heat treatment process; and welding the plurality of blades to a tubular body.

The plurality of blades may comprise a hollow blade.

Hardening the plurality of blades may comprise using a first heat treatment to increase the plurality of blades to a first hardness. Hardening the plurality of blades may optionally comprise using a second heat treatment to decrease the plurality of blades to a second hardness.

Welding the plurality of blades may comprise using a plurality of spaced apart weld seams to attach each blade to the tubular body.

The method may comprise adjusting a collapse force of the plurality of blades, for example by using a plurality of spaced apart weld seams to attach each blade to the tubular body.

The plurality of blades may comprise a steel alloy material. The steel allow material may have a carbon equivalent content in a range from 0.2 to 0.6.

The method may comprise mechanically forming the cut metal sheet into a hollow blade.

The method may further comprise cutting the tubular body from a second metal sheet and rolling the cut second metal sheet into a tubular shape.

In another embodiment, a centralizer includes a body having a bore therethrough; and a plurality of hollow blades attached to the body, wherein a plurality of weld seams is used to attach each blade to the body.

The plurality of hollow blades may comprise a steel alloy material. The steel allow material may have a carbon equivalent content from 0.2 to 0.6.

The plurality of hollow blades may have been heat treated to change a hardness of the plurality of hollow blades.

The body may be made of the same steel alloy material as the plurality of blades.

The plurality of hollow blades may be positioned at an angle relative to a central axis of the body.

## BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

Figure 1 illustrates a schematic view of a centralizer disposed on a tubular in accordance with one embodiment.

Figure 2 is a perspective view of an exemplary embodiment of a centralizer.

Figure 3 is a side view of the centralizer of Figure 2.

Figure 4 is a cross-sectional view of the centralizer of Figure 2.

Figure 5 is a side view of another exemplary embodiment of a centralizer.

Figure 6 is a cross-sectional view of the centralizer of Figure 5.

Figure 7 shows an example of a non-heat treated blade attached to a body.

Figure 8 shows a first example of a heat treated blade attached to a body.

Figure 9 shows a second example of a heat treated blade attached to a body.

Figure 10 shows a third example of a heat treated blade attached to a body.

Figure 11 shows a fourth example of a heat treated blade attached to a body.

Figure 12 shows the effect of blade hardness on the collapse force.

Figure 13 shows the effect of weld seam length on the collapse force.

## DETAILED DESCRIPTION

Embodiments of the present disclosure provide a centralizer having increased hardness. The centralizers are more resistant to wear and collapse.

Figure 1 illustrates a perspective view of an exemplary centralizer 100 disposed on a tubular 10, such as casing or drill pipe. The centralizer 100 is positioned on the tubular 10 between two stop collars 20, which may be attached to the tubular 10. The centralizer 100 is rotatable relative to the tubular 10 and axially movable relative to the tubular 10 between the stop collars 20. The stop collars 20 limit axial movement of the centralizer 100 along the tubular 10.

Figure 2 is a perspective view of the centralizer 100, according to one embodiment. Figure 3 is a side view of the centralizer 100, and Figure 4 is a cross-sectional view of the centralizer 100. The centralizer 100 includes a tubular body 110 having a bore 108 extending therethrough. The inner diameter of the centralizer 100 is sufficiently larger than the outer diameter of the tubular 100 so the centralizer 100 can rotate and axially move relative to the tubular 10. The tubular body 110 may be manufactured from a ferrous containing material, such as a steel alloy. In one embodiment, the tubular body 110 is cut from a flat sheet of steel to a desired length. The steel sheet is then rolled into a tubular shape and welded together. The weld seam 112 is shown in Figures 2 and 4. In one embodiment, an optional pressure relief port 115 or valve is formed in the tubular body 110.

The centralizer 100 includes a plurality of blades 120 disposed on the exterior surface of the tubular body 110. Any suitable number of blades 120 may disposed on the tubular body 110, such as two, three, four, five, six, eight, ten, or more blades 120. As shown in Figure 4, six blades 120 are disposed circumferentially on the tubular body 110. The blades 120 may be attached to the tubular body 110 by welding. In one embodiment, the blades 120 have a hollow core 123, as shown in Figure 4. In one example, the blades 120 are cut from a flat sheet of steel alloy material to a desired

size. The cut sheet is placed into a forming tool having a mold of the desired shape of the blades 120. Then, the cut sheet is mechanically pressed by the forming tool to form the hollow blade shape. Figure 1 shows an exemplary centralizer with hollow blades 120. Figure 1 shows the blades 120 aligned in the axial direction of the tubular body 110. It is contemplated the blades 120 may be positioned at an angle relative to the central axis of the tubular body 110. For example, the blades 120 may be positioned between 1° and 40° relative to the central axis. As shown in Figures 5 and 6, the blades 220 of the centralizer 200 are positioned at an angle of 24° relative to the central axis of the tubular body 210.

In one embodiment, the blades 120 are made from a steel alloy material that is heat treatable. In one aspect, the blades 120 are made from a steel alloy material having a carbon equivalent content ("CE") in a range from 0.2 to 0.6. The carbon equivalent content can be determined by using the Dearden and O'Neill formula adopted by the International Institute of Welding, as shown below:

$$CE = \%C + \frac{\%Mn}{6} + \frac{\%Cr + \%Mo + \%V}{5} + \frac{\%Cu + \%Ni}{15}$$

Suitable examples of the steel alloy material include, but are not limited to, 35MnB5, 25CrMo4, 42CrMo4, 26MnB5, and 34MnB5.

In one aspect, the strength of the blades 120 can be adjusted by heat treating the blades 120. In one embodiment, the heat treatment includes quenching the blade and, optionally, tempering the blade. In general, quenching increases the hardness of the blade, and tempering increases the toughness of the blade, which decreases the hardness of the blades. The quenching process may begin by heating the blade to a temperature between 760°C and 930°C, such as between 815°C and 900°C, for a time period between 60 and 90 minutes. In one example, during the quenching process, the blade is heated to a temperature between 760°C and 850°C. In another example, during the quenching process, the blade is heated to a temperature between 850°C and 930°C. Then the blade 120 is cooled by immersing the blade 120 in a quenching fluid such as water or oil. For example, the blade 120 can be quenched in oil at temperature between 60°C and 90°C. In one embodiment, the hardness of the blade after quenching may be in a range between 46-50 HRC.

If the resulting heat treated blade 120 has a hardness that is higher than the target hardness, then the tempering process can be performed to reduce the hardness. In one example, to temper blade, the blade 120 is heated to a temperature between 350°C and 420°C for a time period between 60 minutes and 120 minutes. In one embodiment, the tempered blade has a hardness in a range from 40 HRC to 44 HRC. The heat treated blades 120 has increased strength to resist collapse and increased wear resistance.

In one aspect, the collapse force of the blades 120 can be adjusted by controlling the weld seam length attaching the blades 120 to the body 110. In one embodiment, the entire perimeter of the blade 120 is welded to the tubular body 110 using a continuous seam, i.e., a single seam with no gaps along the perimeter. In another embodiment, a plurality of the weld seams 130 are used to attach the blade 120 to the body 110. One end of each seam 130 is spaced from an end of an adjacent seam 130. Referring to the example shown in Figure 3, four seams 130 are used to attach the blade 120 to the tubular body 110. While four seams 130 are used in this example, any suitable number of seams 130 may be used; for example, two, three, five, six, eight, ten or more seams may be used. Each seam 130 may have the same or different length. For example, each seam 130 can have the same length. In another example, the seams 130 can have a different length. In yet another example, some of the seams 130 can have the same length, and other seams 130 can have a different length. While without wishing to be bound by theory, it is believed the collapse force may be adjusted based on the sum of the lengths of the seams 130 and the position of the seams 130. In one aspect, the sum of the lengths of two or more seams is from 30% to 95% to the length of the perimeter of the blade 120. In one embodiment, a combination of heat treatment and weld seam length is used to adjust the collapse force of the centralizer.

**Examples**

Figure 8 shows an example of a blade attached to a body. The blade is manufactured from a steel alloy material; specifically, 25CrMo4. The blade was heat treated to increase its hardness to 43 HRC. In particular, the blade was austenitized at a temperature of about 860°C for 90 minutes and then quenched in oil at 80°C. Thereafter, the blade 120 was tempered by heating the blade to a temperature of 380°C for a time period of 70 minutes. The blade was circumferentially welded to the body using a single seam.

Figure 9 shows another example of a blade attached to the body. The blade is manufactured from a steel alloy material; specifically, 25CrMo4. The blade was heat treated to increase its hardness to 48 HRC. In particular, the blade was austenitized at a temperature of about 860°C for 90 minutes and then quenched in oil at 80°C. The blade 120 was not subsequently tempered. The blade was circumferentially welded to the body using a single seam.

Figure 10 shows another example of a blade attached to a body. The blade is manufactured from a steel alloy

material; specifically, 25CrMo4. The hardness of the blade was increased to 43 HRC using the heat treatment process described above for Figure 8. The blade was welded to the body using four seams. The seams at the ends of the blade have a length of 25mm, and the two seams in the middle of the blade have a length of 40mm for a total length of 130mm.

Figure 11 shows another example of a blade attached to a body. The blade is manufactured from a steel alloy material; specifically, 25CrMo4. The hardness of the blade was increased to 43 HRC using the heat treatment process described above for Figure 8. The blade was welded to the body using four seams. The seams at the ends of the blade have a length of 30mm, and the two seams in the middle of the blade have a length of 60mm for a total length of 180mm.

Figure 7 shows an example of a blade attached to a body. The blade is manufactured from a steel alloy material; specifically, 25CrMo4. The blade was not heat treated and retains its original hardness of 156 HB. The blade was circumferentially welded to the body using a single seam.

**Comparison**

The blades were tested to determine the influence of blade hardness and the influence of weld seam length on the collapse force. The collapse force is defined as the force needed to reduce the outer diameter of the centralizer sufficiently to still deliver a 67% standoff. Standoff is an indication of eccentricity and is defined by the following formula:

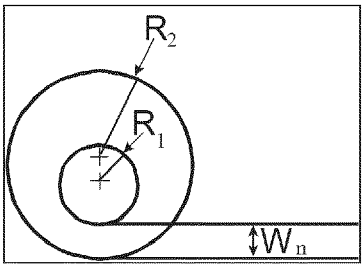


% Standoff is defined by:

$$\frac{W_n \times 100}{R_2 - R_1}$$

The result of this formula is given as a percentage, where 0% represents the tubular is in contact with the outer wall and 100% represents perfectly a centered tubular.

Figure 12 shows the effect of blade hardness on the collapse force. In particular, the effect of hardness on the collapse force was compared for the blades shown in Figures 7-9. The heat treated blades of Figures 8 and 9 have a hardness of 43 HRC and 48 HRC, respectively. Each of the three blades was circumferentially welded to the body using a single seam. The results of the collapse test for the blades of Figures 7-9 are indicated by lines F7-F9, respectively. It can be seen that the heat treated blades of F8 and F9 can withstand a much higher force than the non-heat treated blade of F7 before reaching 67% standoff. Specifically, the collapse force for the heat treated blades F8 and F9 are 41.6 metric tons and 45.8 metric tons, respectively. The collapse force for the untreated blade F7 is 24.6 metric tons. In addition, the blade of Figure 9, being harder, can withstand a slight higher force than Figure 8 before reaching 67% standoff.

Figure 13 shows the effect of weld seam length on the collapse force. In particular, the effect of weld seam length on the collapse force was compared for the blades shown in Figures 8, 10, and 11. The blade of Figure 8 was circumferentially welded using a single seam, and thus has the longest weld seam length. The blade of Figure 10 was welded to the body using four seams, which have a total length of 130mm. The blade of Figure 11 was welded to the body using four seams, which have a total length of 180mm. All three blades have the same hardness of 43 HRC. The results of the collapse test for the blades of Figures 8, 10, and 11 are indicated by lines F8, F10, and F11, respectively. It can be seen from Figure 13 that the longer weld seam length of F8 can withstand a higher collapse force than shorter weld seam lengths of F10 and F11 before reaching 67% standoff. Specifically, the collapse force for the circumferentially welded blade F8 is 41.6 metric tons, while the collapse force for blades F10 and F11 are 29.4 metric tons and 33.6 metric tons, respectively.

In one embodiment, a method of manufacturing a centralizer having a plurality of blades includes cutting the plurality of blades from a metal sheet; hardening the plurality of blades using a heat treatment process; and welding the plurality of blades to a tubular body.

In one or more of the embodiments described herein, the plurality of blades may comprise a hollow blade.

In one or more of the embodiments described herein, hardening the plurality of blades may comprise using a first heat treatment to increase the plurality of blades to a first hardness.

In one or more of the embodiments described herein, hardening the plurality of blades may comprise using a second heat treatment to decrease the plurality of blades to a second hardness.

In one or more of the embodiments described herein, welding the plurality of blades may comprise using a plurality of spaced apart weld seams to attach each blade to the tubular body.

In one or more of the embodiments described herein, the method may include adjusting a collapse force of the plurality of blades by using a plurality of spaced apart weld seams to attach each blade to the tubular body.

In one or more of the embodiments described herein, the plurality of blades may comprise a steel alloy material having a carbon equivalent content in a range from 0.2 to 0.6.

In one or more of the embodiments described herein, the plurality of blades may comprise a hollow blade.

In one or more of the embodiments described herein, the method may include mechanically forming the cut metal sheet into a hollow blade.

In one or more of the embodiments described herein, the method may include cutting the tubular body is cut from a second metal sheet and rolling the cut second metal sheet into a tubular shape.

In another embodiment, a centralizer includes a body having a bore therethrough; and a plurality of hollow blades attached to the body, wherein a plurality of weld seams is used to attach each blade to the body.

In one or more of the embodiments described herein, the plurality of hollow blades may comprise a steel alloy material having a carbon equivalent content from 0.2 to 0.6.

In one or more of the embodiments described herein, the plurality of hollow blades may have been heat treated to change a hardness of the plurality of hollow blades.

In one or more of the embodiments described herein, the body may be made of the same steel alloy material as the plurality of blades.

In one or more of the embodiments described herein, the plurality of hollow blades may be positioned at an angle relative to a central axis of the body.

While the foregoing is directed to embodiments of the present disclosure, other and further embodiments of the disclosure may be devised without departing from the basic scope thereof, and the scope thereof is determined by the claims that follow.

## Claims

**1.** A method of manufacturing a centralizer having a plurality of blades comprising:

cutting the plurality of blades from a metal sheet;
hardening the plurality of blades using a heat treatment process; and
welding the plurality of blades to a tubular body.

**2.** The method of claim 1, wherein the plurality of blades comprise a hollow blade.

**3.** The method of claim 1 or 2, wherein hardening the plurality of blades comprises using a first heat treatment to increase the plurality of blades to a first hardness.

**4.** The method of claim 3, wherein hardening the plurality of blades comprises using a second heat treatment to decrease the plurality of blades to a second hardness.

**5.** The method of any preceding claim, wherein welding the plurality of blades comprises using a plurality of spaced apart weld seams to attach each blade to the tubular body.

**6.** The method of claim 5, further comprising adjusting a collapse force of the plurality of blades by using a plurality of spaced apart weld seams to attach each blade to the tubular body.

**7.** The method of any preceding claim, wherein the plurality of blades comprise a steel alloy material having a carbon equivalent content in a range from 0.2 to 0.6.

**8.** The method of any preceding claim, further comprising mechanically forming the cut metal sheet into a hollow blade.

**9.** The method of any preceding claim, further comprising cutting the tubular body from a second metal sheet and rolling the cut second metal sheet into a tubular shape.

**10.** A centralizer, comprising:

a body having a bore therethrough; and
a plurality of hollow blades attached to the body, wherein a plurality of weld seams is used to attach each blade

to the body.

**11.** The centralizer of claim 10, wherein the plurality of hollow blades comprises a steel alloy material having a carbon equivalent content from 0.2 to 0.6.

**12.** The centralizer of claim 10 or 11, wherein the plurality of hollow blades were heat treated to change a hardness of the plurality of hollow blades.

**13.** The centralizer of any one of claims 10 to 12, wherein the body is made of the same steel alloy material as the plurality of blades.

**14.** The centralizer of any one of claims 10 to 13, wherein the plurality of hollow blades is positioned at an angle relative to a central axis of the body.

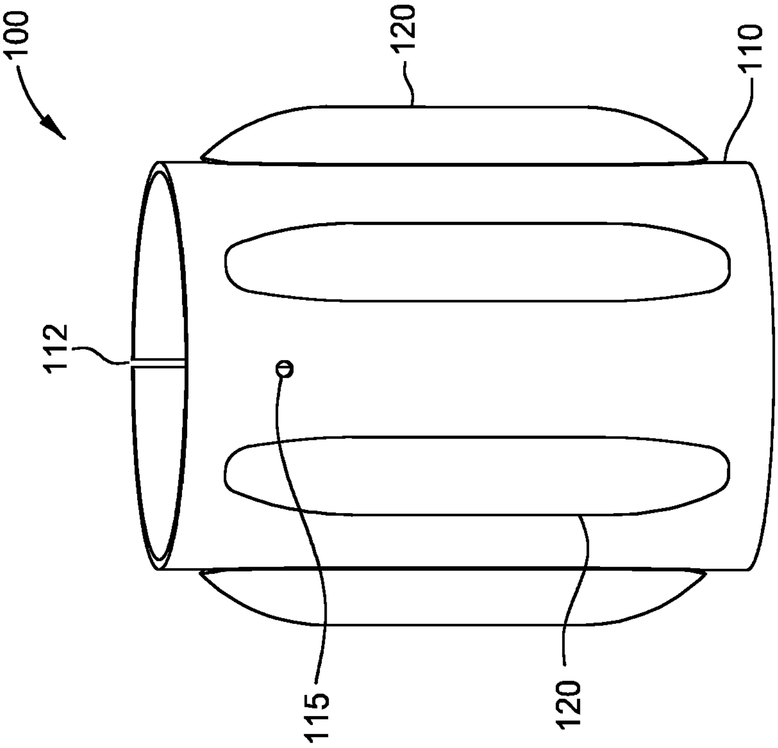


FIG. 2

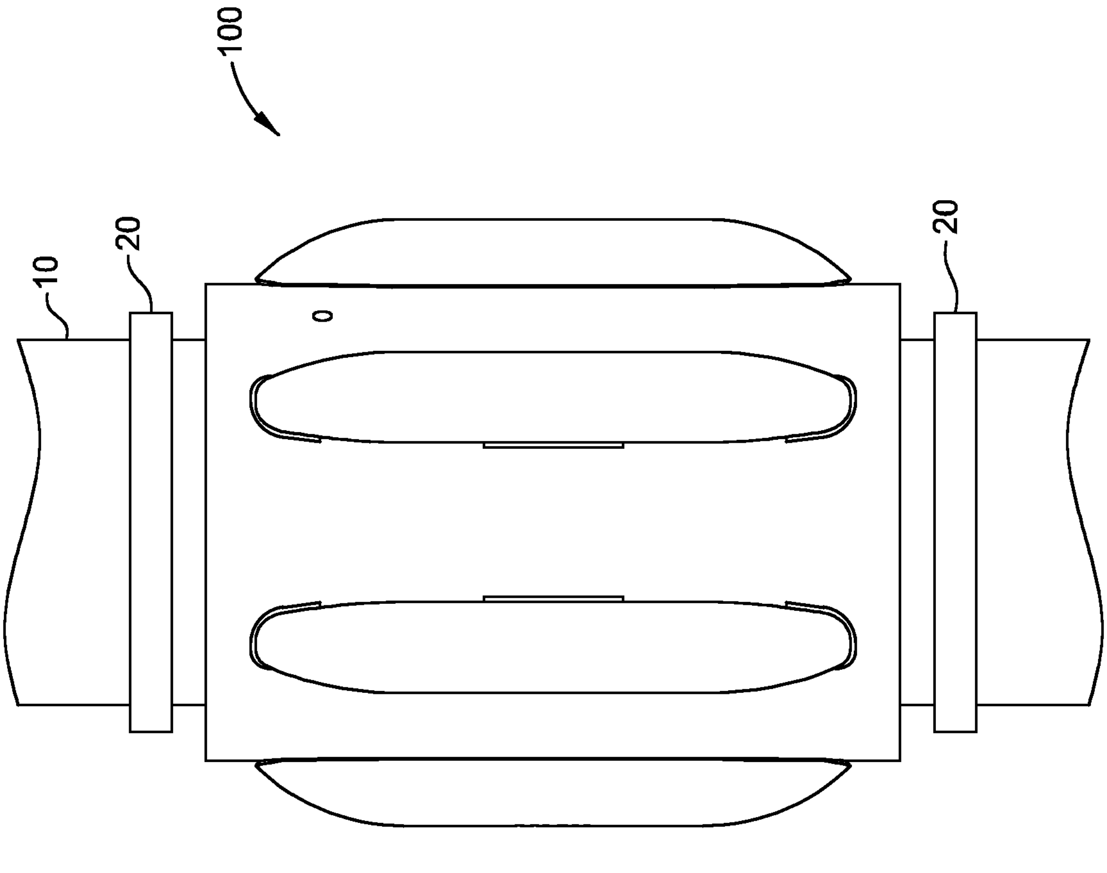


FIG. 1

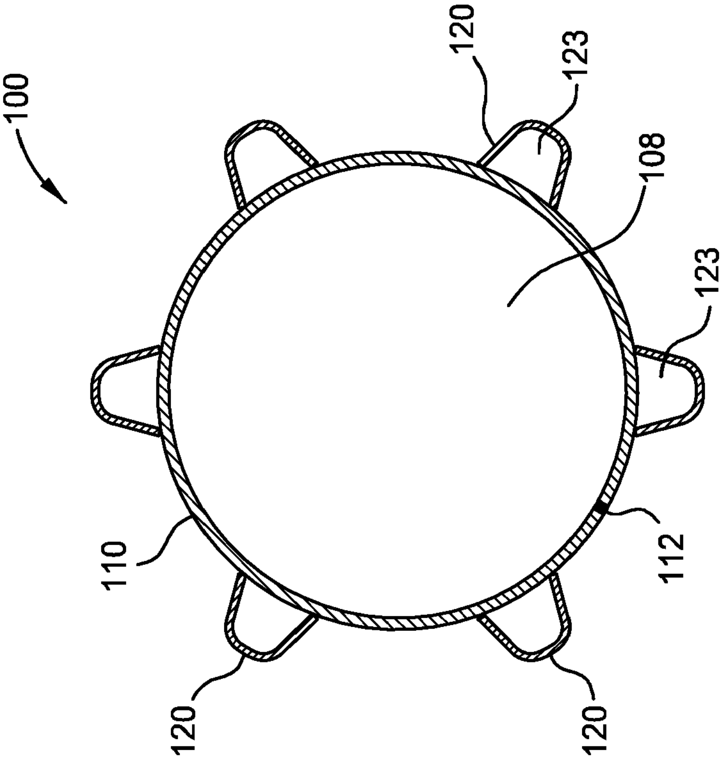
100
120
123
108
123
110
112
120
120

FIG. 4

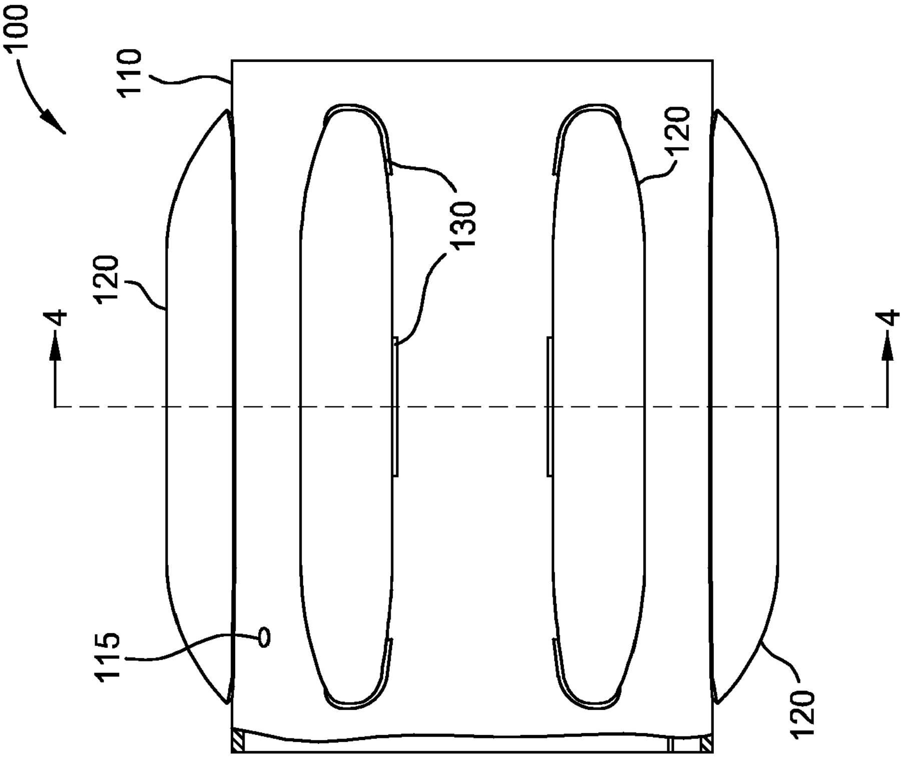
100
110
4
120
130
130
120
4
115
120

FIG. 3

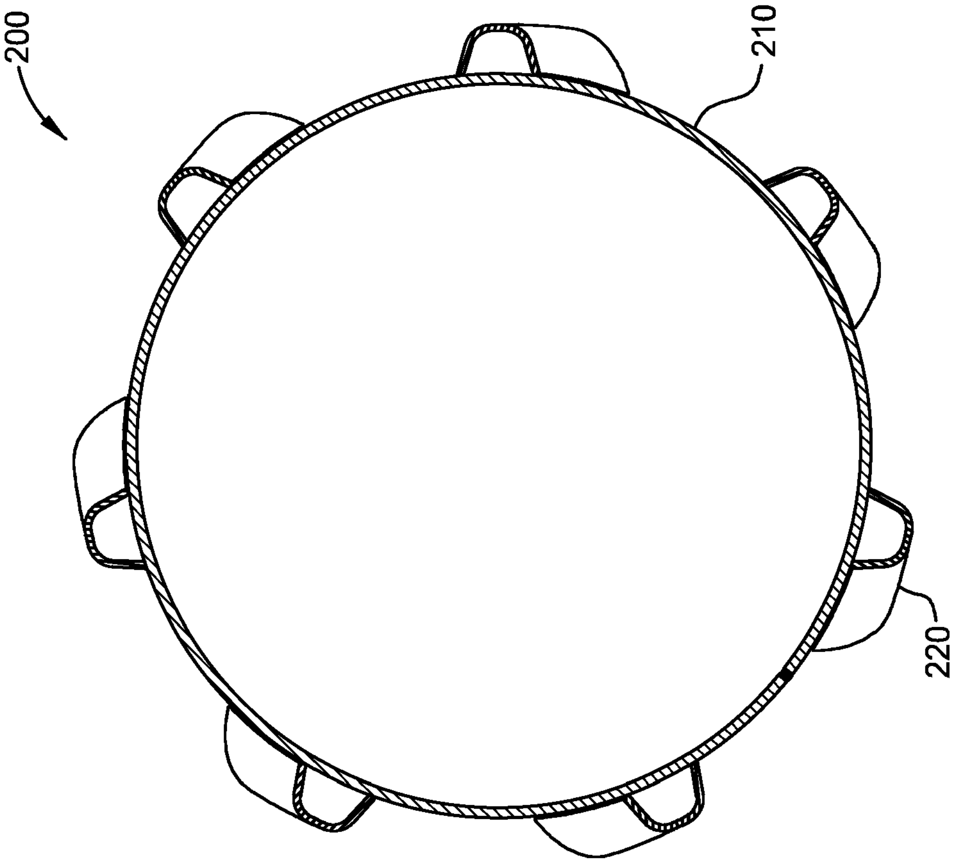


FIG. 6

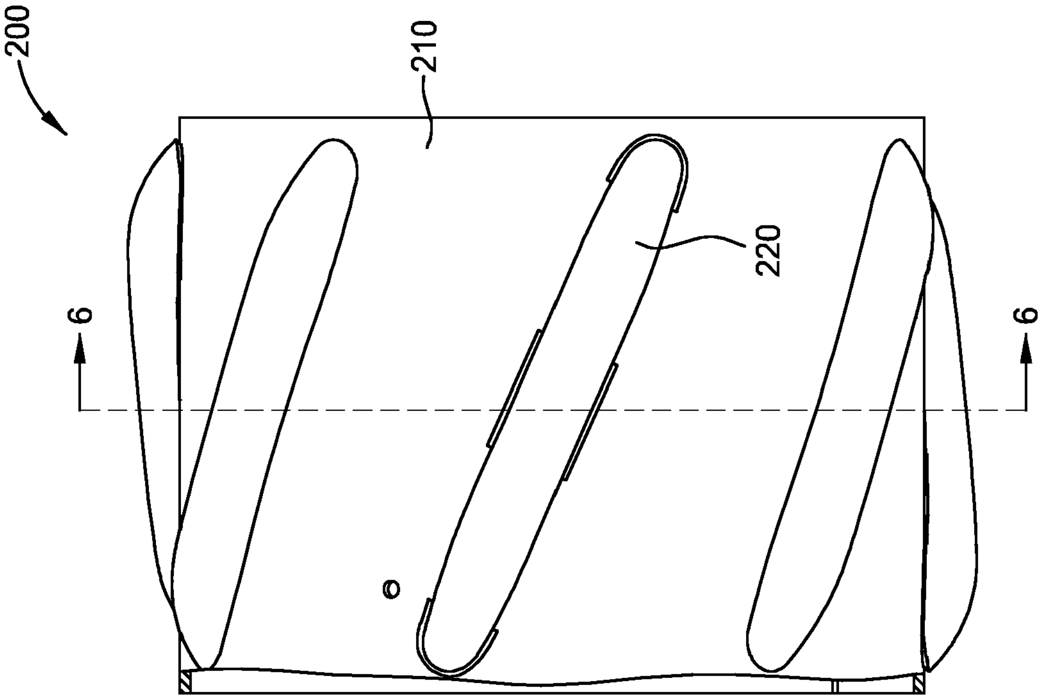


FIG. 5

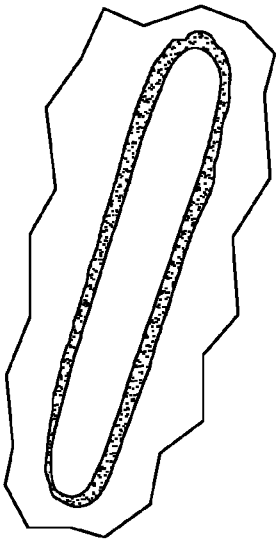

FIG. 7

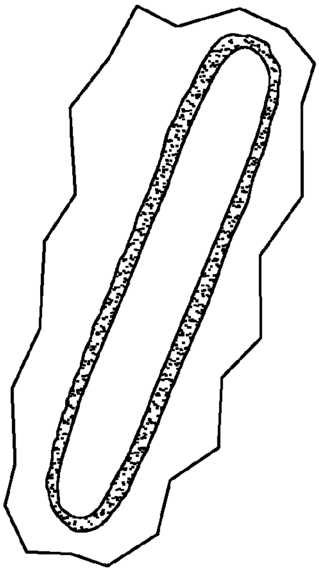

FIG. 8

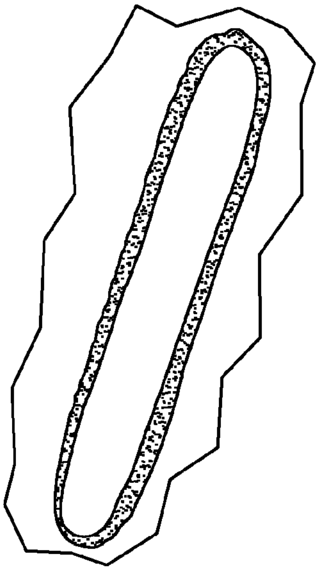

FIG. 9

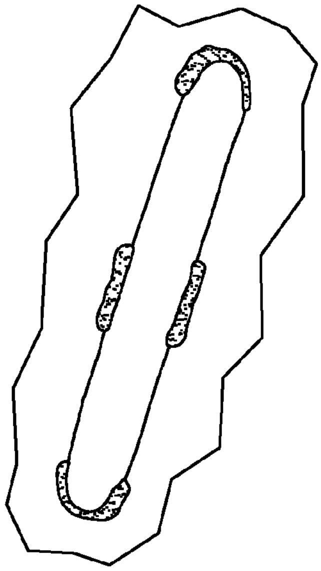

FIG. 10

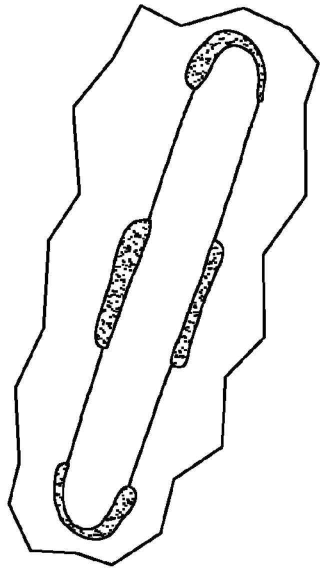

FIG. 11

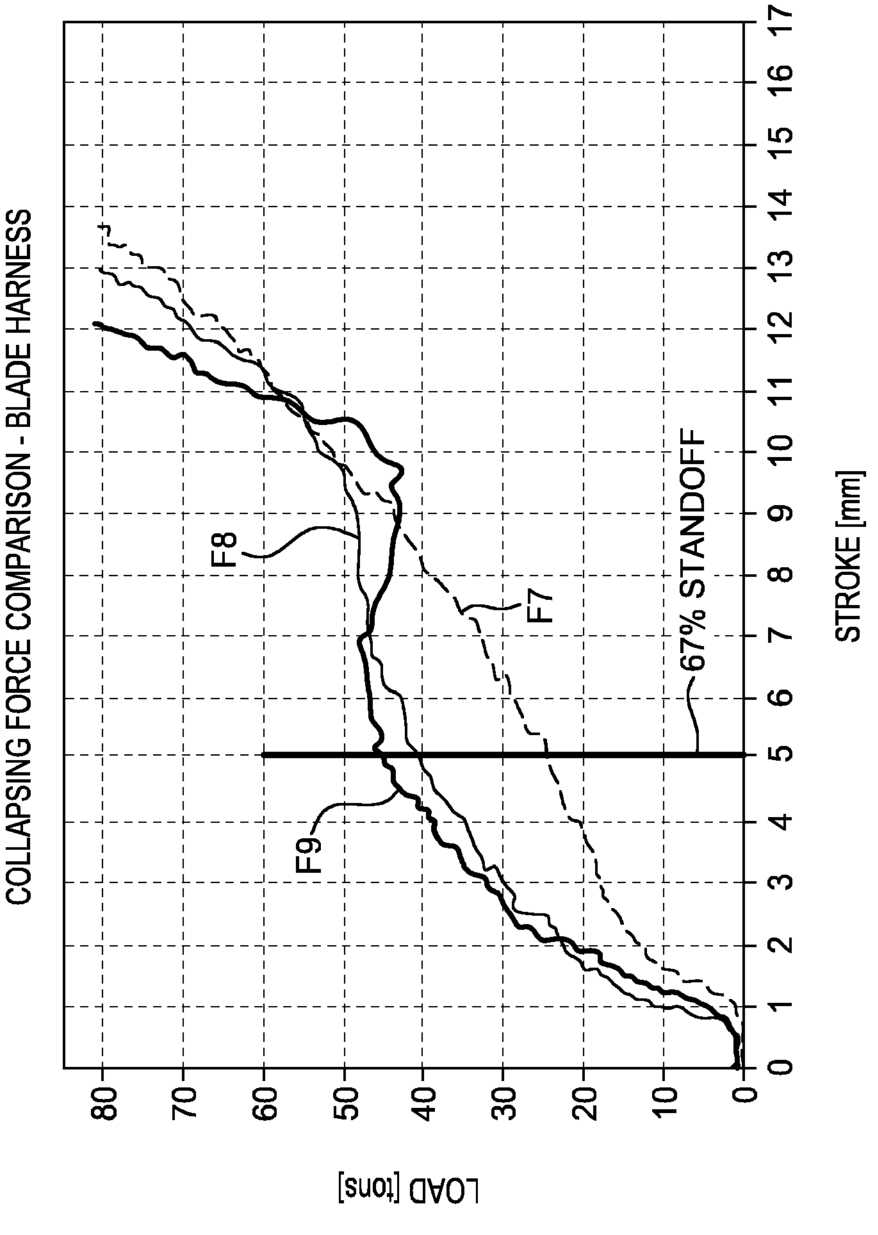
COLLAPSING FORCE COMPARISON - BLADE HARNESS
LOAD [tons]
0
10
20
30
40
50
60
70
80
STROKE [mm]
0
1
2
3
4
5
6
7
8
9
10
11
12
13
14
15
16
17
F7
F8
F9
67% STANDOFF

FIG. 12

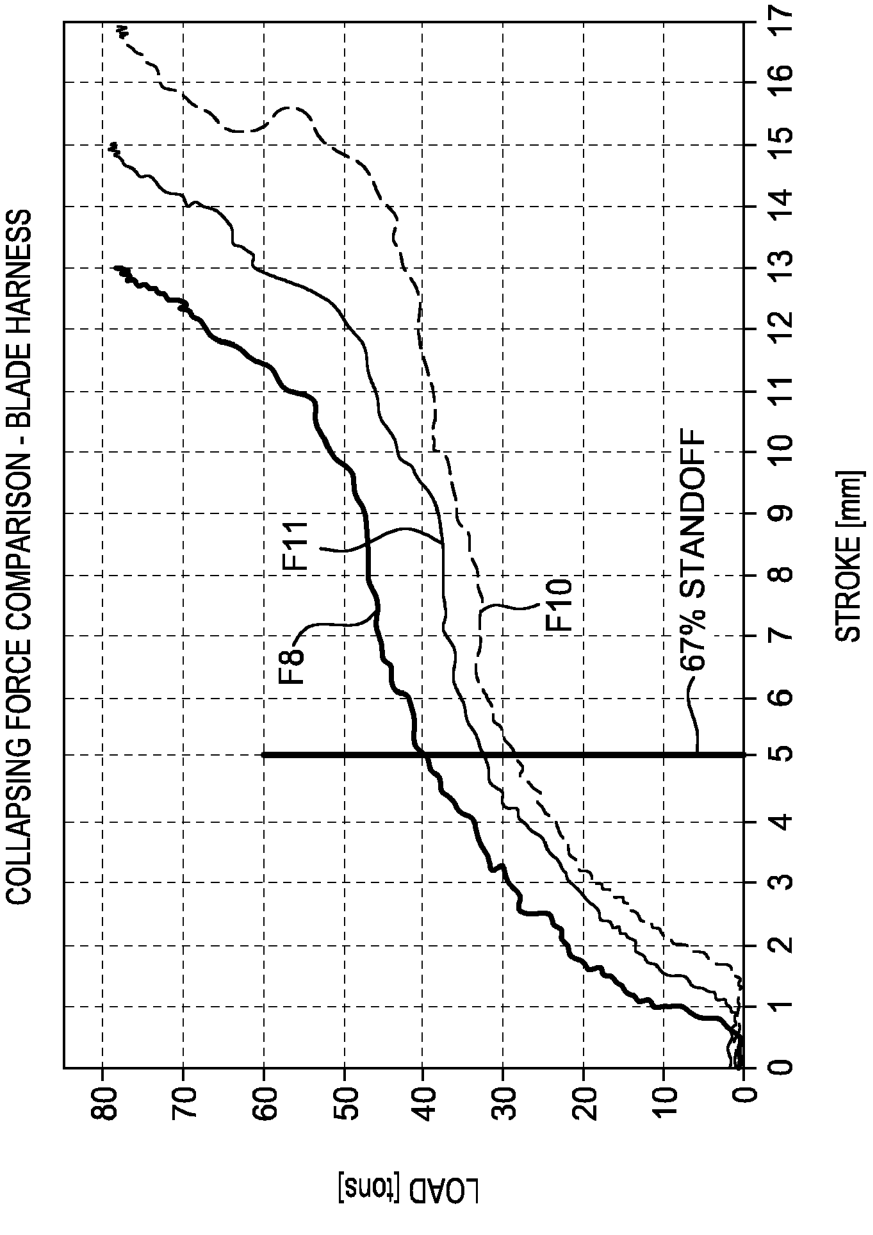
COLLAPSING FORCE COMPARISON - BLADE HARNESS
LOAD [tons]
0
10
20
30
40
50
60
70
80
STROKE [mm]
0
1
2
3
4
5
6
7
8
9
10
11
12
13
14
15
16
17
F8
F11
F10
67% STANDOFF

FIG. 13

Europäisches Patentamt
European Patent Office
Office européen des brevets

# EUROPEAN SEARCH REPORT

Application Number
EP 20 18 7803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 697 442 A (BALDRIDGE MORRIS G [US]) 16 December 1997 (1997-12-16)<br>* column 5, line 39 *<br>----- | 1-14 | INV.<br>E21B17/10 |
| A | US 2015/060050 A1 (SCOTT JOE LYNN [US] ET AL) 5 March 2015 (2015-03-05)<br>* paragraph [0050] *<br>----- | 1-14 | |

TECHNICAL FIELDS SEARCHED (IPC)
E21B

The present search report has been drawn up for all claims

1

| Place of search | Date of completion of the search | Examiner |
|---|---|---|
| Munich | 14 December 2020 | Ott, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 18 7803

This annex lists the patent family members relating to the patent documents cited in the above-mentioned European search report. The members are as contained in the European Patent Office EDP file on The European Patent Office is in no way liable for these particulars which are merely given for the purpose of information.

14-12-2020

| Patent document cited in search report | Publication date | Patent family member(s) | Publication date |
|---|---|---|---|
| US 5697442 A | 16-12-1997 | NONE | |
| US 2015060050 A1 | 05-03-2015 | DK 3039168 T3 | 25-02-2019 |
| | | EP 3039168 A1 | 06-07-2016 |
| | | EP 3425082 A1 | 09-01-2019 |
| | | US 2015060050 A1 | 05-03-2015 |
| | | US 2018163289 A1 | 14-06-2018 |
| | | US 2020173006 A1 | 04-06-2020 |
| | | WO 2015031644 A1 | 05-03-2015 |

EPO FORM P0459

For more details about this annex : see Official Journal of the European Patent Office, No. 12/82